# EUROPEAN PATENT APPLICATION

(11) **EP 2 113 875 A1**
(43) Date of publication of application: **04.11.2009**
(21) Application number: 09158749.3
(22) Date of filing: 24.04.2009
(51) Int. Cl.: G06Q 10/00

(54) **Account communication management**

(30) Priority: 30.04.2008 GB 0807922
(71) Applicant: Adeptra Limited, Reading, Berkshire RG2 6UB (GB)
(72) Inventor: McGivern, Tony, Reading, Berkshire RG2 6UB (GB); Venezia, Lou, Reading, Berkshire RG2 6UB (GB); Russell, Jonathan, Reading, Berkshire RG2 6UB (GB); Williams, Percy, Reading, Berkshire RG2 6UB (GB); Macfarlane, Daniel, Reading, Berkshire RG 26UB (GB); Evans, Noel, Reading, Berkshire RG2 6UB (GB); Brichieri-Colombi, Anthony, Reading, Berkshire RG2 6UB (GB)
(74) Representative: Slingsby, Philip Roy

(57) **Abstract**

The present invention relates to a method and system of managing communication with a set of accounts. The method includes the step of: allocating each account to a portfolio using a filter; selecting a communication strategy for each account using a set of rules for the portfolio; and managing communication with the account using the communication strategy. Historical information about the strategies used may be used in selecting a communication strategy for the account.

## Description

### Field of Invention

The present invention is in the field of account communication management. Particularly, the invention relates to selecting communication strategies for an account to more effectively produce a successful result such as payment on the account.

### Background

Businesses often require successful management of communication for their customer portfolios to enable the business to obtain a result from customer contact. For example, a credit card company has many customers who have a credit card account. At certain times it becomes necessary or desirable to communicate with the customer such as for payment of an overdue account.

At present, companies send accounts requiring contact to a database to be processed by a contact department.

The accounts may be selected by a rule to be sent to the database - for example, all accounts overdue by 90 days are sent.

A call centre then processes the database to contact the customer, for example, to obtain payment on the account.

The call centre operators utilise a script that is followed when talking with the customer.

Some call centres may select between two scripts based on the amount that is overdue - for example, a low amount must be paid immediately or a high amount can be paid in instalments.

The disadvantage of present methods for managing this communication for accounts is that it is difficult to ensure a successful result as a simple method is used for all accounts.

It is object of the present invention to provide an account management system which overcomes the disadvantages of the prior art, or at least provides a useful alternative.

### Summary of Invention

According to a first aspect of the invention there is provided a method for managing account communication comprising: allocating each account to a portfolio using a filter; selecting a communication strategy for each account using a set of rules for the portfolio; and managing communication with the account using the communication strategy.

### Brief Description of the Drawings

Embodiments of the invention will now be described, by way of example only, with reference to the accompanying drawings in which:
Figure 1: shows a block diagram illustrating the infrastructure of an embodiment of the invention;
Figure 2: shows a flow diagram illustrating the method of an embodiment of the invention;
Figure 3: shows an example of rules used to select a strategy;
Figure 4: shows how a rule is constructed in accordance with an embodiment of the invention;
Figure 5: shows a value for a rule is constructed in accordance with an embodiment of the invention;
Figure 6: shows an example of a strategy;
Figures 7a to 7m:
   shows an example of an embodiment of the invention being applied to manage the communications of an account.

### Detailed Description of Preferred Embodiments

The present invention provides a system for managing communication in relation to an account. Communication is managed for the account by selecting a communications strategy using a set of rules.

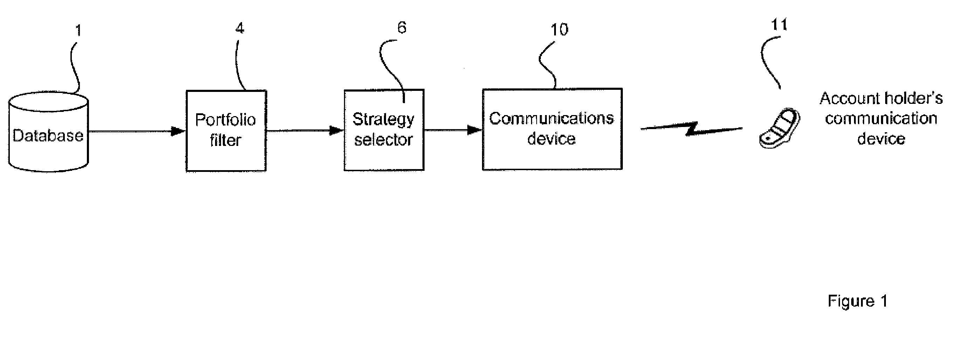

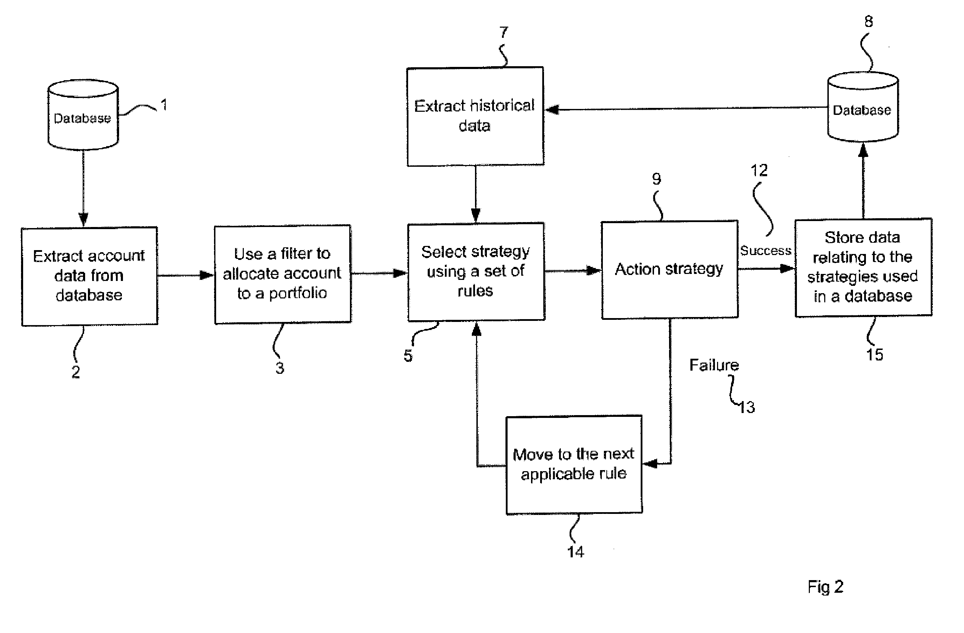

An embodiment of the invention will now be described with reference to Figures 1 and 2.

The invention will be described in relation to a service provider model, in which account management services are provided to a plurality of clients.

Figure 1 shows an infrastructure. A database 1 is shown which stores information about accounts. Accounts may be credit card accounts or other accounts where obligations must be fulfilled within a time period such as a loan account or a supply account.

The accounts may be held by a customer such as an individual, or a company or other legal entity. The account may be associated with contact information for one or more persons responsible for the account (account holders).

The database 1 may be comprised of a single data store or may be distributed across a number of data stores. It will be appreciated that a data stream or similar may be used in place of the database.

The database 1 may be co-located with the components of the invention. However, it is preferred that the database is within the information technology infrastructure of a client.

Data is extracted 2 from the database by a component of the invention. It will be appreciated that data may be transmitted and received by this component instead of the component directly extracting the data from the database. The data may be transmitted in batch form or singly.

The data preferably comprises information about an account or plurality of accounts. The information may include a unique account identifier, specify money owed and period of time for which the money has been outstanding. The information may also include contact information for the account holders. The contact information may include voice contact information such as a landline, cellular device or voice-over-IP telephone number. The contact information may include text-based contact information such as a telephone number for an SMS or MMS-capable device. The contact information may include an email address.

In step 3, the accounts are sorted using a portfolio filter 4 into one of a plurality of portfolios.

The portfolio filter 4 may use a set of rules to determine which portfolio the account is sorted into. For example, accounts where the money has been outstanding for some time may be sorted into a "Late Stage Portfolio".

Each portfolio is associated with a further set of rules.

In step 5, a strategy selector component 6 uses the set of rules to determine which communication strategy should be selected for the account.

The strategy selector may extract information, in step 7, from a historical information database 8 to provide as further input to the set of rules.

The first rule in the set which is satisfied is used to determine a corresponding communications strategy.

In step 9, the strategy is used to drive a communications device 10 to contact the account holder through the communication device 11 of the account holder.

The communications device 10 may utilise the contact information of the account holder to contact the account holder.

The communication strategy may include when to contact the account, how many attempts should be made, which script to use, when/if to leave a voice mail if unanswered, where the account includes multiple contacts - which contact to communicate with, and what type of voice to use.

The communications device 10 may be wholly automated or may provide an interface to a human being. If an interface is provided the human being may provide voice reading of the script selected by the strategy and respond to voice responses from the account holder in accordance with the script.

The communication strategy may also include when to delay communication with the account and when to stop communicating with the account.

The communications strategy may be regarded as successful, as in step 12, if the account is paid or if the account is agreed to be paid.

The communications strategy may be regarded as a failure, as in step 13, if the account holder cannot be contacted or does not respond, or if not agreement on payment is made.

If the communications strategy is a failure, the next applicable rule in the set of rules is selected by the strategy selector in step 14. The communications strategy corresponding to this rule is then used. This process is repeated until success is achieved.

In step 15, information relating to the strategies used or the status of success (account paid/promise to pay) may be stored within the historical information database 8. All historical information may then available for future strategy determination

In one embodiment of the invention, the *sequence* of strategies used may be recorded. A further component of the invention may process the sequence of strategies across multiple accounts to generate a report on the frequency of sequences used. It will be appreciated that this report may be helpful in assisting the service provider or client to fine tune the rules or strategies.

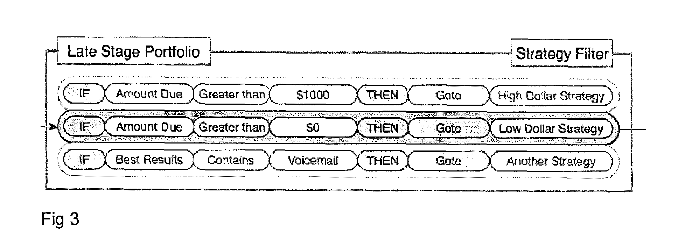

Figure 3 shows an example of rules used to determine a communication strategy.

For example, in the rules shown the first rule is if the amount due is greater than $1000 then the high dollar strategy is selected. If this rule is not satisfied or if the strategy of this rule is attempted and fails then the next rule is assessed. The next rule shown is to select the low dollar strategy where the amount due is greater than $0.

Rules similar to those shown in Figure 3 may also be used within the portfolio filter to allocate an account for processing within a portfolio. For example, a rule might assess the age of the amount owing and if the age is over 90 days might allocate the account to the Late Stage Portfolio.

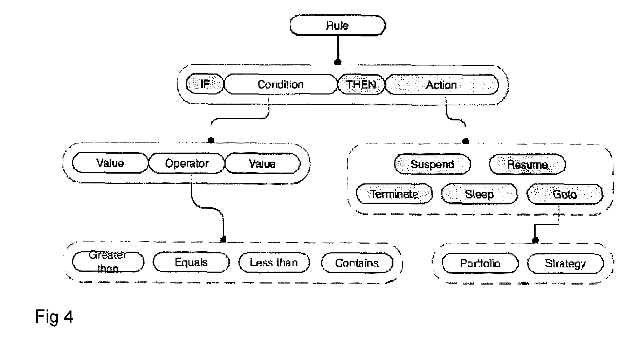

Figure 4 shows how a rule is constructed in accordance with the invention.

A rule may be comprised of a condition and an action. If the condition is satisfied then the action is performed.

The condition may be comprised of the comparison of two values. The comparisons include whether the first value is greater than the second value, whether the first value equals or does not equal the second value, whether the first value is less than the second value, or whether the first value contains or does not contain the second value.

The condition may include AND or OR statements such as (VALUE 1 EQUALS VALUE 2) OR (VALUE1 EQUALS VALUE3).

The action may be suspend the processing of the account, resume processing of the account, terminate the processing of the account, send the processing of the account to sleep for a set time, or "goto" a portfolio or strategy. "Goto" a portfolio is used within the set of rules which filters accounts to portfolios to allocate the account to a portfolio. "Goto" a strategy specifies that the account is to be processed by the given communication strategy.

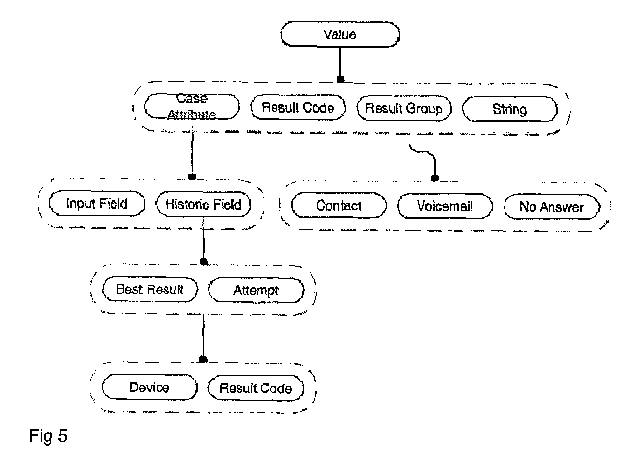

Figure 5 shows what may comprise a value for a rule.

A value may be comprised of a case attribute, a result code, a result group, or a string.

A case attribute is a stored value associated with the account. It may include an input field or a historic field. A historic field is a stored value relating to previous rules performing on the account. The historic field may include device used to communicate with account contact which obtain the best result for the previous rules or the result code for the previous rules. The historic field may include the number of "attempts" or different rules that have been executed for this account.

A result code is a value which results from the execution of an action. The result code may be "promise to pay the account", "hanging up without promise to pay", "goes to voicemail", or "payment of the account"

A result group is a convenient grouping of result codes, for example No Answer, Busy, Dial Error result codes may be a result group of No Contact.

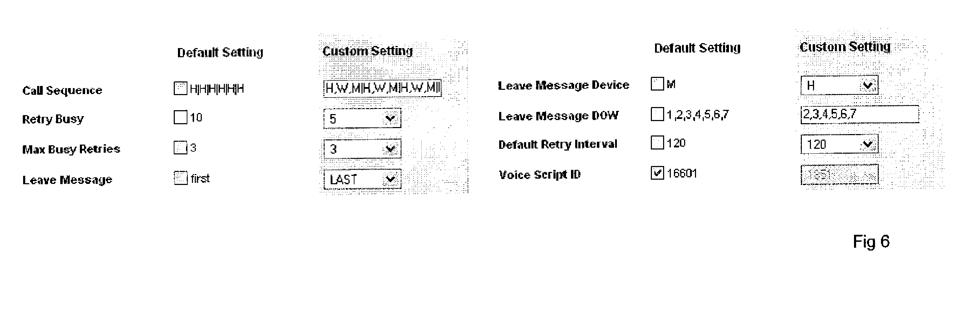

Figure 6 shows an example of a strategy.

The strategy is determined by the selection of settings. In the strategy shown in Figure 6 the settings include a call sequence (for example, call home (H) then call work (W) then call mobile (M)), number of retries if busy, the maximum number of retries, when a message should be left, and on which device the message should be left (for example, home phone (H) or mobile phone (M)).

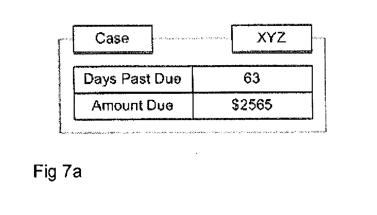

Figures 7a to 7m illustrate how the invention may be applied to an account.

In Figure 7a, the account XYZ is shown. The account is 63 days past its due date. The amount due on the account is $2565.

The details of the account are provided to the system of the invention.

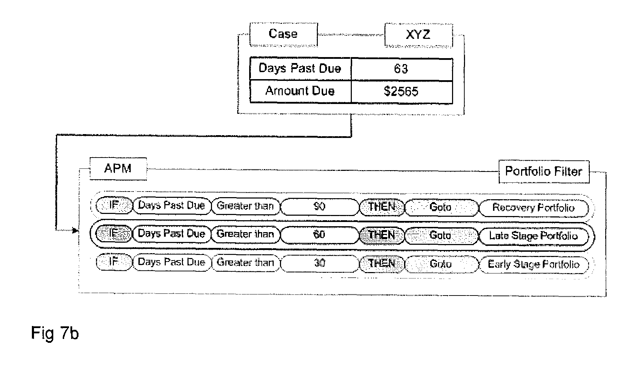

In Figure 7b, a list of rules is used to filter the account into an appropriate portfolio for processing.

It can be seen that the first rule that the account satisfies is the days past due greater than 60. The action associated with this rule is allocation of the account to the "Late Stage Portfolio".

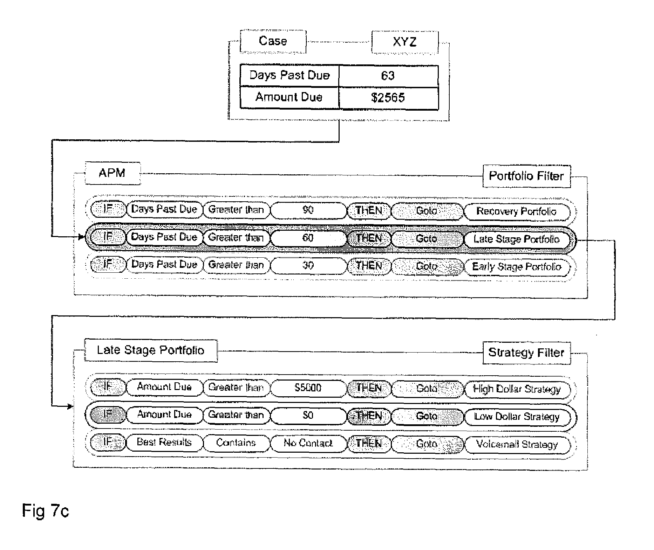

Figure 7c shows a list of rules defined for the "Late Stage Portfolio". The first rule that the account satisfies is the amount due is greater than $0. The action defined for this rule is selection of the "Low Dollar Strategy" for handling communication in relation to the account.

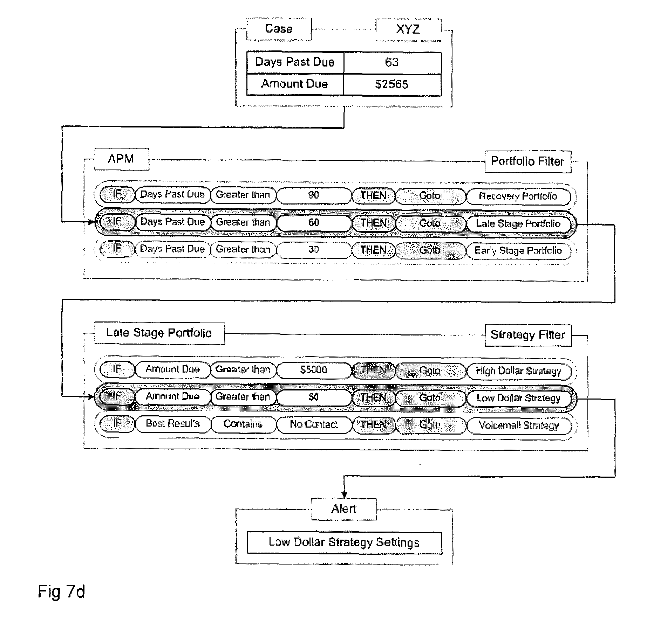

Figure 7d shows the settings for the "Low Dollar Strategy" being loaded.

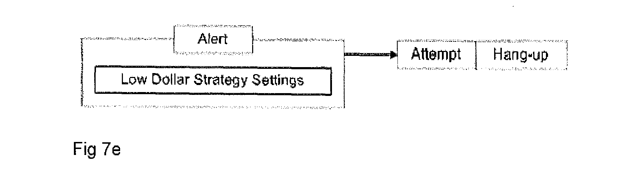

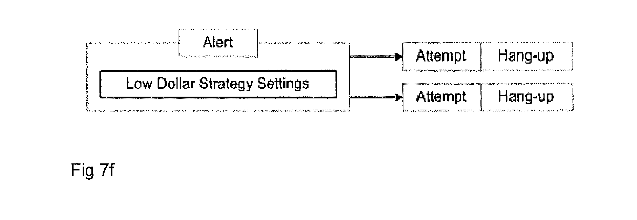

Figures 7e and 7f show the processing of the account using the settings of the "Low Dollar Strategy". In this strategy an attempt is made to communicate with the account holder at most twice. A "Low Dollar Strategy" script is used for both attempts. In this example both communication attempts result in the account holder hanging up without payment or a promise to pay.

A "Low Dollar Strategy" may differ from a "Stern Strategy" in the voice treatment that is employed to engage the consumer, e.g. instead of a greeting block of "This is an important call for John Smith from Sun Bank", the greeting for a stern script may change to "This is an important call for John Smith from Sun Bank, please do not hang up", along with a voice, eg female to male and/or a tone change

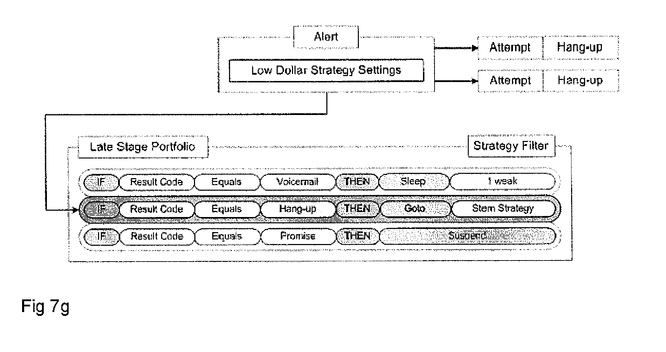

At the end of the "Low Dollar Strategy" the result code that issues from the strategy is "Hang-up". Figure 7g shows that the first rule that is satisfied in the list of rules for the "Late Stage Portfolio" is that the result code equals "hang-up". The action associated with this rule is the selection of the "Stern Strategy".

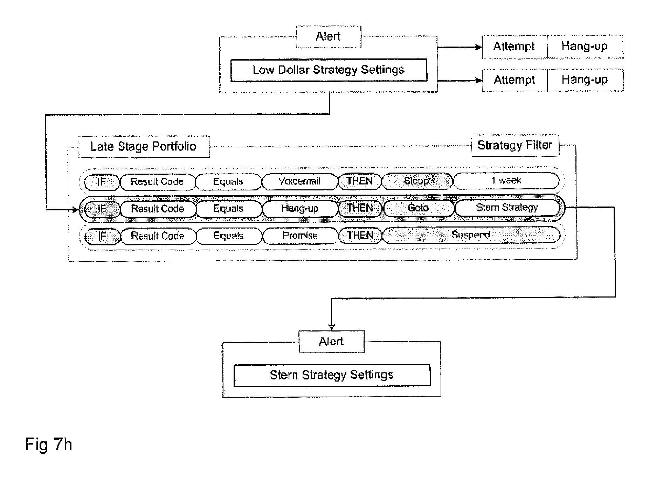

The "Stern Strategy" settings are loaded in Figure 7h.

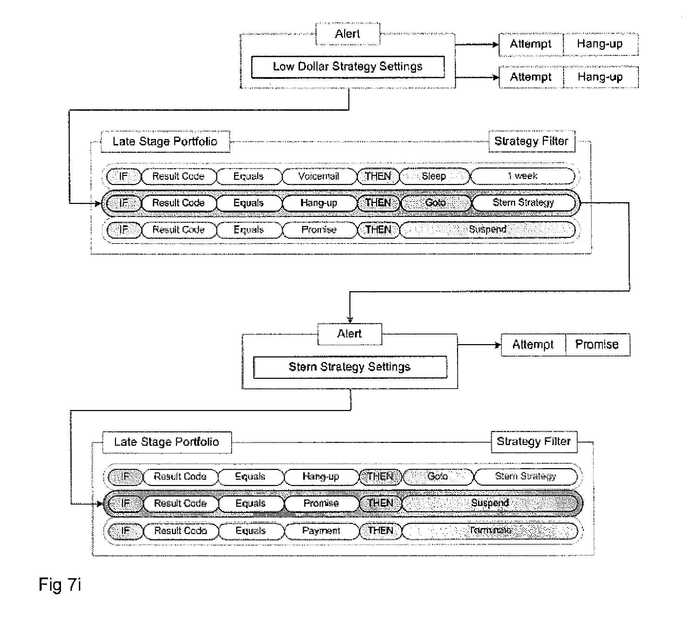

In Figure 7i, the "Stern Strategy" obtains a promise to pay from the account holder. The "promise" to pay forms the result code for the "Stern Strategy" action.

The first rule in the list which is satisfied is where the result code equals "promise". The action associated with this rule is to suspend processing communication with the account holder relating to the account.

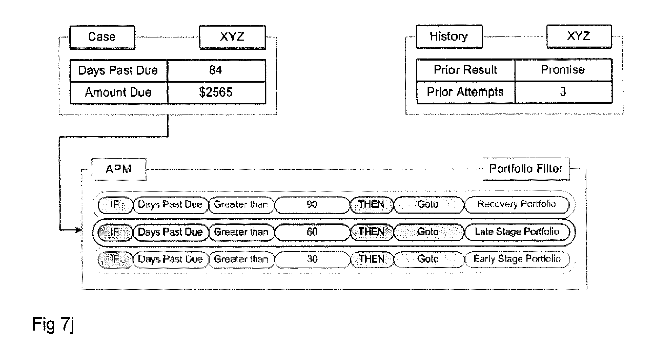

Figure 7j shows the same account being sent to the system of the invention.

The account is now 84 days past its due date, but still satisfies the same filtering rule and is sent to the "Late Stage Portfolio" for processing.

As previous communication has been made with this account historical information is associated with the account. In the present example, the historical information specifies the last result achieved - a promise to pay - and the number of attempts made to communicate with the account holder - 3.

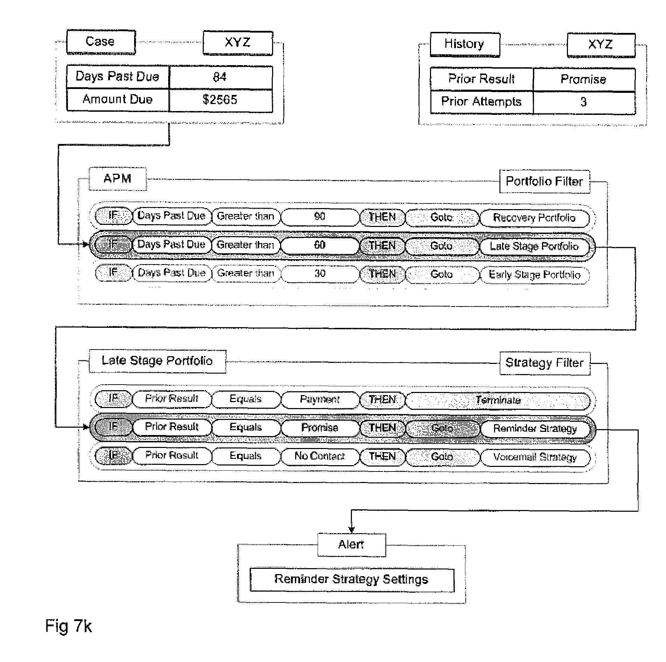

Figure 7k shows that the first rule in the list which is satisfied is that the prior result equals "promise". The action associated with this rule is the selection of the reminder strategy.

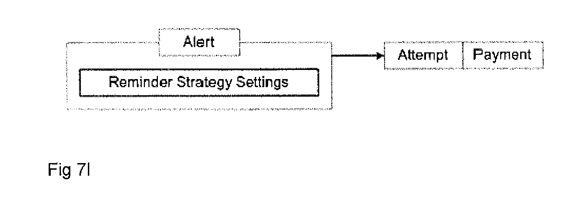

In Figure 7l, the reminder strategy settings define communicating with the account holder using a specified script. In this example, the account holder makes payment on the account. The strategy will then cease execution with "payment" as its result code.

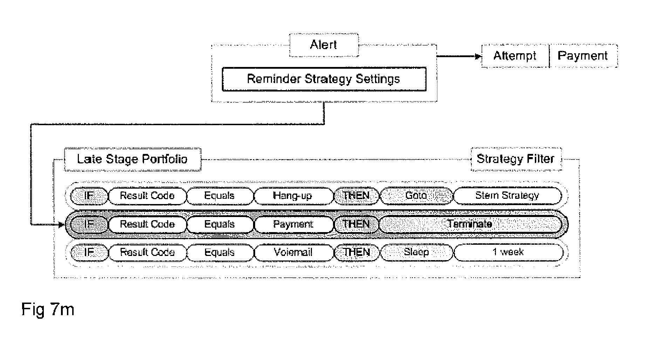

Figure 7m shows that the first rule satisfied on the list is where the result code equals "payment". The action associated with this rule is the termination of processing on this account.

It will be appreciated that the present invention may be implemented as software executing on computer hardware or within hardware.

A potential advantage of embodiments of the present invention is that communication with accounts can be managed more efficiently by utilising an automated system and by utilising easy to create rules to generate complex management processes. In addition, communication with accounts may be more effective in obtaining a success result as the strategy used will be appropriate to the account. Furthermore, embodiments of the present invention also provide for fine tuning of the system using data captured during execution.

While the present invention has been illustrated by the description of the embodiments thereof, and while the embodiments have been described in considerable detail, it is not the intention of the applicant to restrict or in any way limit the scope of the appended claims to such detail. Additional advantages and modifications will readily appear to those skilled in the art. Therefore, the invention in its broader aspects is not limited to the specific details representative apparatus and method, and illustrative examples shown and described. Accordingly, departures may be made from such details without departure from the spirit or scope of applicant's general inventive concept.

## Claims

1. A method of managing communication with a set of accounts, comprising the steps of:
allocating each account to a portfolio using a filter;
selecting a communication strategy for each account using a set of rules for the portfolio; and
managing communication with the account using the communication strategy.

2. A method as claimed in claim 1 including the step of receiving the set of accounts.

3. A method as claimed in claim 2 wherein the accounts are received from an external database.

4. A method as claimed in claim 3 wherein the accounts are pushed from the external database.

5. A method as claimed in claim 3 wherein the accounts are pulled from the external database.

6. A method as claimed in any preceding claim including the step of repeating the selecting and managing steps for the account until a successful result is achieved.

7. A method as claimed in any preceding claim wherein at least one of the rules in the set of rules uses an account characteristic to determine the communication strategy.

8. A method as claimed in claim 7 wherein the characteristics of the account include historical information about the account.

9. A method as claimed in any preceding claim wherein an automated system manages communication with the account.

10. A method as claimed in any preceding claim wherein communication includes using a voice telecommunication system.

11. A method as claimed in any preceding claim wherein the communication strategy includes one or more of calling window, call attempts, script selection, voice mail preferences, which device to contact, and what type of voice to use.

12. A method as claimed in any preceding claim wherein the communication strategy includes one or more of when to delay communication with the account and when to stop communicating with the account.

13. A method as claimed in any preceding claim including the step of recording the strategy which produced a successful result for the account.

14. A method as claimed in claim 13 the recorded strategy forming at least part of the historical information about the account.

15. A method as claimed in any preceding claim including the step of recording the sequence of strategies used before a successful result is achieved.

16. A method as claimed in claim 15 including the step of processing the sequence of strategies for multiple accounts to produce a report on the frequency of sequences used.

17. A method as claimed in any preceding claim wherein the filter includes a set of rules.

18. A system for managing communication with a set of accounts, comprising:
a portfolio filter arranged for allocating each account to a portfolio using a filter;
a strategy selector arranged for selecting a communication strategy for each account using a set of rules for the portfolio of the account; and
a communication device for communicating with an account in accordance with the communication strategy selected for the account.

19. Software for managing communication with a set of accounts, comprising:
an allocation component configured for allocating each account to a portfolio using a filter;
a selection component for selecting a communication strategy for each account using a set of rules for the portfolio; and
a management component for managing communication with the account using the communication strategy.

20. Storage media configured to store the software of claim 19.

21. Apparatus configured to perform the method of any one of claims 1 to 17.
